# EUROPÄISCHE PATENTANMELDUNG

(11) **EP 2 942 335 A1**
(43) Veröffentlichungstag der Anmeldung: **11.11.2015**
(21) Anmeldenummer: 14167400.2
(22) Anmeldetag: 07.05.2014
(51) Int. Cl.: C04B 26/04, C04B 28/00, C04B 28/24, C04B 111/28

(54) **Kälte- und wärmedämmendes Brandschutzformteil**

(71) Anmelder: Armacell Enterprise GmbH & Co. KG, 12529 Schönefeld OT Waltersdorf (DE)
(72) Erfinder:
(74) Vertreter: von Füner, Nicolai

(57) **Zusammenfassung**

Das kälte- und wärmedämmende Brandschutzformteil, enthaltend
• 8 bis 25 Gew.-% eines organisch-anorganischen Hybrid-Bindemittels, welches feinteilige Kieselsäure und ein organisches Polymer enthält,
• 0,5 bis 15 Gew.-% Fasern,
• 45 bis 75 Gew.-% mindestens eines Leichtfüllstoffes und
• 6 bis 18 Gew.-% mindestens eines wasserabspaltenden Minerals, ist
dadurch gekennzeichnet, dass die Fasern ausgewählt sind aus der Gruppe der organischen hydrophilen oder wasserlöslichen Fasern, die in Anwesenheit von Wasser und bei Temperaturen oberhalb der Raumtemperatur und unterhalb der Siedetemperatur des Wassers adhäsive Eigenschaften zeigen.

## Beschreibung

Die Erfindung betrifft ein kälte- und wärmedämmendes Brandschutzformteil, enthaltend
- 8 bis 25 Gew.-% eines organisch-anorganischen Hybrid-Bindemittels, welches feinteilige Kieselsäure und ein organisches Polymer enthält,
- 0,5 bis 15 Gew.-% Fasern,
- 45 bis 75 Gew.-% mindestens eines Leichtfiillstoffes und
- 6 bis 18 Gew.-% mindestens eines wasserabspaltenden Minerals.

Die Erfindung betrifft insbesondere ein speziell für die Kälte- und Wärmedämmung entwickeltes Brandschutzformteil, insbesondere in Form von Rohrschalen, Segmente, Bögen und Platten, enthaltend mindestens einen Leichtfüllstoff, Fasern und faserige Klebstoffe bzw. Fasern mit klebenden Eigenschaften.

Unter dem Begriff Leichtfüllstoffe sind hier hochschmelzende mineralische, insbesondere geschlossenzellige, Hohlkugeln und Granulate niedriger Dichte, d. h. einer Schüttdichte von weniger als 200 kg/m³ nach EN ISO 60 zu verstehen, zum Beispiel Glashohlkugeln, geblähte Vulkanasche, Blähperlit usw.

### Stand der Technik

Durch die Einführung europäischer Normen für die technische Gebäudeausrüstung und für betriebstechnische Anlagen in der Industrie sind in diesem Bereich die Anforderungen an Dämmstoffe bezüglich ihres Brandverhaltens gestiegen. Insbesondere für eine brandsichere Kältedämmung entsprechen ehemals eingesetzte Dämmstoffe nicht mehr den heutigen Anforderungen. Insbesondere genügen organische geschäumte geschlossenzellige Dämmstoffe nicht mehr den heutigen Brandschutzanforderungen bei der Verwendung in Fluchtwegen oder Räumen mit erhöhten Brandschutzauflagen. Bekannte Schaumgläser entsprechen zwar den Brandschutzanforderungen, sind aber in der Verarbeitung aufwendig.

### Hintergrund zum baulichen Brandschutz

Bauliche Maßnahmen müssen vor allem folgende Aspekte berücksichtigen:
- Brandverhalten von Baustoffen
- Feuerwiderstand der Bauteile
- Aufteilung der Gebäude in Brandabschnitte durch Brandwände und -schutztüren
- Fluchtwegplanung
- aktive Brandbekämpfung durch Sprinkleranlagen.

Gerade die immer stärker werdende Durchdringung großer Gebäude mit Energieversorgungs-, Steuer- und Datenleitungen läuft der von der Bauaufsicht geforderten Abschnittstrennung mit Brandwänden und feuerbeständigen Geschossdecken zuwider. Deshalb werden in modernen Gebäuden mit größeren Menschenansammlungen (beispielsweise Bahnhöfen, Flughäfen, Museen, Kongresshallen) spezielle Feuerschutzeinrichtungen wie Brandmeldeanlagen, Notbeleuchtung, Brandschutztore und Brandschutztüren eingesetzt, um die Funktion möglichst lange aufrechtzuerhalten. Insbesondere Fluchtwege sind besonders zu schützen.

Nicht zu vergessen sind Gebäude, die von in ihrer Bewegung eingeschränkten Menschen genutzt oder bewohnt werden (Krankenhäuser, Kliniken, Altenwohnheime, Seniorenwohnanlagen, usw.).

Ein weiteres Problem im Stand der Technik besteht in Folgendem: Die zur Stabilisierung der Brandschutzformteile darin enthaltenden üblicherweise eingesetzten Fasern müssen in den Verbund eingeklebt werden, wobei der dazu benötigte Bedarf an Klebern den Gewichtsanteil der Faser oft übertrifft. Besonders Kohlefasern lassen sich nur sehr schlecht einbinden. Mineralische Fasern haben den Nachteil der hohen Dichte und der Sprödigkeit, sind aber nicht brennbar und lassen sich gut mit anorganischem Bindemittel verkleben. Ein großer Anteil dieser Fasern wird jedoch im Produktionsprozess aufgerieben und erhöht unnötig die Rohdichte. Übliche organische Fasern (mit Ausnahme der Kohlenstofffaser) haben den Nachteil der Brennbarkeit. Benötigt man zusätzlich organische Bindemittel, um diese einzubinden, ist ein Einsatz unter Berücksichtigung der angestrebten Nichtbrennbarkeit nahezu ausgeschlossen.

### Aufgabe und Lösung der Erfindung

Aufgabe der Erfindung: Der Erfindung liegt die Aufgabe zugrunde, äußerst leichte und stabile, nicht brennbare (Euroklasse Al) Formteile mit einer Dichte von weniger als 0,125 g/cm³ (Messung in Anlehnung an DIN EN ISO 845) und einem Schmelzpunkt nach DIN 4102 größer als 1000 °C herzustellen. Die Festigkeit der Formteile soll ausreichend hoch sein, um zum Beispiel eine wasserdampfdichte Kaschierung zu tragen und sich unter normaler Verwendung und Belastung nicht zu verformen.

Gefordert wird außer der niedrigen Rohdichte eine gleichzeitige Erhöhung der Biegezugfestigkeit. Beide Eigenschaften sind insbesondere für die Kältedämmung von erheblicher Bedeutung.

Außerdem sollen die Fasern beim Konturenschneiden (z. B. beim Herstellen von Rohrschalen) nicht mehr aus dem Verbund gerissen werden, wie dies bei Verwendung von Kohlenstofffasern geschieht, damit weniger Staub beim Schneiden entsteht. Außerdem soll die Oberfläche weniger durch das Herausreißen von Fasern beschädigt werden.

Diese Aufgabe wird bei einem kälte- und wärmedämmenden Brandschutzformteil der eingangs genannten Art erfindungsgemäß dadurch gelöst, dass die Fasern ausgewählt sind aus der Gruppe der organischen hydrophilen oder wasserlöslichen Fasern, die in Anwesenheit von Wasser und bei Temperaturen oberhalb der Raumtemperatur, d.h. bei Temperaturen oberhalb von 20 °C und unterhalb der Siedetemperatur des Wassers adhäsiv werden, d.h. adhäsive Eigenschaften zeigen.

Unter dem Begriff Hybridbindemittel wird hier ein Bindemittel mit sowohl anorganischen als auch organischen Anteilen verstanden. Ausführliche Erläuterungen finden sich weiter unten nach der Zwischenüberschrift "Erfindungsgemäß eingesetztes Hybridbindemittel".

Vorzugsweise enthält das eingesetzte Hybridbindemittel feine Partikel, die wiederum aus amorphen Kieselsäurepartikeln zusammengesetzt sind, die in einem Polymer auf Acrylatbasis dispergiert sind, insbesondere n-Butylacrylat und Methylmethacrylat und/oder Latex.

Weitere vorteilhafte Ausgestaltungen der Erfindung sind in den Unteransprüchen angerührt.

Erfindungsgemäß wichtig ist der Einsatz faseriger Klebstoffe, zum Beispiel aus Polyvinylalkohol (PVOH). Durch den Einsatz dieser Fasern kann die Rohdichte bei gleichzeitiger Erhöhung der Biegezugfestigkeit gesenkt werden. Beides sind Eigenschaften, die insbesondere für die Kältedämmung von Bedeutung sind.

Insbesondere wird als faseriger Klebstoff eine Polyvinylalkohol-Faser verwendet, die unter dem Handelsnamen "KURALON^{®}" von der Fa. Kuraray Europe GmbH, Hattersheim am Main, Deutschland hergestellt wird und dort erhältlich ist.

Vorzugsweise sind die Mengen bzw. Anteile von Hybridbindemitteln, organischen Fasern und wasserabspaltendem Mineral derart aufeinander abgestimmt, so dass die Anforderungen der geforderten Brandschutzklasse eingehalten werden.

Der Geometrie der Formteile ist grundsätzlich keine Grenze gesetzt. Auch Formteile mit komplexen Geometrien sind herstellbar.

Steine, Platten, Hohlkörper und andere Formteile sind ebenso herstellbar wie vornehmlich Rohrschalen und Bögen.

Zur Herstellung wird von einer wässrigen Masse ausgegangen und daraus das Formteil durch bekannte Formgebungsverfahren, nachfolgendes Temperieren bei Temperaturen bis maximal 80 °C (siehe unten), darauf folgendes Trocknen mit thermischer Nachbehandlung bis etwa 150 °C hergestellt. So sind zum Beispiel die folgenden Formgebungsverfahren geeignet:
- Vibrationspressen mit niedriger Auflast,
- Isostatisches Pressen,
- Manuelles oder mechanisches Stampfen bzw. Rammen für komplexe Formen oder eine kleinere Anzahl zu fertigender Teile,
- Strang- bzw. Extrusionsverfahren,
- Schlickergießen, insbesondere für spezielle Teile, aber auch für größere Blöcke, wobei der Wassergehalt der für das Schlickergießen hergestellten Massen um ca. 5 bis 15 % höher liegt und Verdickungsmittel enthält
- Walzen.

Vor dem Trocknen ist ein Temperieren der Masse auf die Lösungstemperatur der faserigen Klebstoffe im Formkern einzustellen. Hierbei ist auf eine mit Wasserdampf gesättigte Umgebungsluft zu achten, um einen frühzeitigen Wasserverlust im Produkt zu verhindern. Die anschließende Trocknung kann bei Temperaturen bis maximal ca. 150 °C vorgenommen werden. Bei ca. 110 °C zersetzen sich die für diesen Fall speziell eingesetzten Netzmittel, wodurch die Hydrophobie erhöht wird.

Im Brandfall werden oberhalb von ca. 200 bis 400 °C die organischen Bestandteile der Hybridbindemittel thermisch zersetzt. Die Bindemittel verspröden, halten aber ihre bindende Wirkung durch den anorganischen Anteil aufrecht. Gleichzeitig wird durch die Wasserabspaltung aus den mineralischen Füllstoffen ein Entzünden (Abbrennen) der kurzfristig auftretenden Rauchgase verhindert.

Eigenschaften und Herstellung der plastischen Masse, die als Ausgangsmaterial zur Herstellung des erfindungsgemäßen kälte- und wärmedämmenden Brandschutzformteils dient

Als Leichtfüllstoff wird geblähtes zelluläres Vulkangestein in Form nicht poröser Hohlgranulate und/oder Glashohlkugeln eingesetzt. Bei porösen Hohlgranulaten würde sich dagegen die Rohdichte erhöhen, mehr Kleber und mehr Mineralien wären erforderlich, die Massen würden stumpfer und wären damit schlechter zu verarbeiten und die Porosität des Endproduktes würde sich deutlich erhöhen.

Als Bindemittel werden Hybridbindemittel eingesetzt, deren Grundstruktur anorganisch ist. Dies bewirkt eine Reduzierung der Brandlast, und die Bindung bleibt, wenn auch mit anderen Eigenschaften, bei hohen Temperaturen erhalten. Da diese Bindemittel beim Abbrand kaum Schrumpf aufweisen, verändern die Formteile ihre Dimensionen unter Brandlast nur unwesentlich.

### Erfindungsgemäß eingesetzte Leichtfüllstoffe

Leichtfüllstoffe sind erfindungsgemäß hochschmelzende mineralische, insbesondere geschlossenzellige, Hohlkugeln und Granulate niedriger Dichte. Erfindungsgemäß geeignet sind mikrozellular expandierte Vulkangesteine und Glashohlkugeln. Werden die mikrozellular expandierte Vulkangesteine nach neuen umweltschonenden und energiesparenden Verfahren hergestellt, erzielen sie Eigenschaften und technische Werte, die sie von älteren, porig expandierten Vulkangesteinen ("expandierten Perliten") unterscheiden. Mikrozellulares, expandiertes Vulkangestein ist ein Füllstoff aus der Gruppe der Aluminiumsilikate und setzt sich aus kugeligen ("Bienenwabenstruktur"), stäbchenförmigen und flockigen Teilchen zusammen, woraus durch mechanische und kohäsive Bindungskräfte höhere Packungsdichten und höhere Verbundfestigkeiten als bei herkömmlichen Mikrohohlkugeln resultieren. Gezielte Oberflächenbeschichtungen ermöglichen einen vorteilhaften Verbund mit der anorganischen bzw. organischen Matrix. Hieraus resultieren weniger Schwund und bessere technische Eigenschaften. Kommerziell erhältlich ist geblähtes imprägniertes Perlit z. B. unter dem Handelsnamen NOBLITE^{®} (Produkt der Fa. NOBLITE, Route de Claye, F-77181 LE PIN, Frankreich)und Technoperl^{®} (Produkt der Europerl Deutschland, D-94032 Passau, Nibelungenplatz 4).

Um besonders niedrige Rohdichten, wie insbesondere in der Kältetechnik gefordert, zu erzielen, hat sich die Kombination oder der alleinige Einsatz von Mikroglashohlkugeln, wie sie z. B. die Fa. 3M anbietet, bewährt.

### Erfindungsgemäß eingesetzte Fasern

Insbesondere werden organische Fasern, faserige Klebstoffe bzw. wasserlösliche klebrige Fasern und gegebenenfalls zusätzlich Kohlefasern und/oder mineralische Fasern eingesetzt. Besonders bevorzugt wird als faseriger Klebstoff eine Polyvinylalkohol-Faser verwendet. Eine solche wird z. B. unter dem Handelsnamen "KURALON"^{®} von der Fa. Kuraray Europe GmbH, Hattersheim am Main, Deutschland hergestellt und ist dort erhältlich.

Fasern z. B. aus Polyvinylalkohol (PVOH) haben den Vorteil, dass diese sich bei erhöhter Temperatur in Wasser lösen und zu einem sehr guten Klebstoff für mineralische Stoffe werden. In den hier beschriebenen Mörteln oder Pasten ist das den Fasern zur Verfügung stehende Wasser so gering gehalten, dass ein vollständiges Lösen der Fasern in Wasser nicht möglich ist. Nur die Oberfläche wird durch den gleichzeitigen Einfluss von Temperatur und Wasser angelöst. Die Faser verklebt nahezu vollständig mit ihrer Umgebung, ohne ihre faserige Struktur zu verlieren. Durch diese optimale Verklebung auch geringer Fasermengen wird insbesondere die Biegezugfestigkeit erhöht, wodurch eine besonders niedrige, für die Kältedämmung geforderte Rohdichte erzielt wird.

Ein weiterer Vorteil liegt darin, dass diese Fasern beim Konturenschneiden (z. B. beim Herstellen von Rohrschalen) nicht mehr aus dem Verbund gerissen werden, wie dies bei Kohlenstofffasern der Fall ist, und dass damit weniger Staub beim Schneiden entsteht. Auch die Oberfläche wird weniger durch das Herausreißen von Fasern beschädigt. Ein vollständiger Ersatz anderer Fasern ist aber durch die Vorgaben der Nichtbrennbarkeit eingeschränkt. Somit hat sich insbesondere die Kombination von Mineralfasern, Kohlenstofffasern und von bei erhöhter Temperatur von 40 - 80 °C wasserlöslicher faseriger Klebstoffe bewährt.

### Erfindungsgemäß eingesetztes Hybridbindemittel

Erfindungsgemäß wird ein organisch-anorganisches Hybridbindemittel eingesetzt welches feinteilige Kieselsäure und ein organisches Polymer entthält. Vorzugsweise enthalten beide Produkte amorphe Kieselsäurepartikel und Polymere auf der Basis von n-Butylacrylat und Methylmethacrylat oder Latex. Die Partikel sind in Wasser dispergiert. Vorzugsweise ist ein solches Produkt unter dem Handelsnamen COL.9^{®} der Firma BASF und/oder Levasil^{®} 4063 der Firma Obermeier erhältlich.

Das Acrylatpolymer bildet keine Schicht im Sinne einer Beschichtung auf den Nanopartikeln der Kieselsäure. Stattdessen stellt das Hybridbindemittel eine Dispersion von amorphen Nanopartikeln der Kieselsäure, eingebettet innerhalb des in Wasser gelösten Acrylatpolymers dar.

Durch die Klebrigkeit der Partikel aufgrund des Polymergehaltes erhält man ein ausgezeichnetes Bindemittel für niedrige Temperaturen, etwa bis 200 °C. Bei erhöhten Temperaturen zersetzt sich der Polymeranteil und die Kieselsäurepartikel bleiben übrig. Damit bleibt die Struktur erhalten, wobei die Kieselsäurepartikel bei einer entsprechend hohen Temperatur ebenfalls ein festes Gerüst bilden. Ein Schrumpf tritt daher weder bei niedriger noch bei erhöhter Temperatur auf. Die Bindemittel haben einen Festkörpergehalt von etwa 35 bis 60 Gew.-%. Der Silicatanteil, bezogen auf den Feststoffgehalt, beträgt 30 bis 50 Gew.-%.

### Erfindungsgemäß eingesetzte wasserabspaltende mineralische Füllstoffe

Erfindungsgemäß kann jedes wasserabspaltende Mineral eingesetzt werden. Vorzugsweise enthält das Brandschutzformteil Aluminiumtrihydrat, Kaolin, Kaolinit, und/oder feinteiliges Siliciumdioxid als wasserabspaltendes Mineral. Zusätzlich kann eine oberflächenbehandelte Kieselerde eingesetzt werden. Unter Kieselerde versteht man ein inniges Gemisch von feinteiliger Kieselsäure und Kaolinit. Bevorzugt liegt das das Siliciumdioxid als Kieselsäuresol, insbesondere Kieselerde vor. Weiter liegt das wasserabspaltende Mineral bevorzugt als ein Gemisch aus Kieselsäuresol und Kaolin/Kaolinit vor. Vorzugsweise wird oberflächenbehandeltes Aluminiumtrihydrat eingesetzt.

### Herstellungsbeispiele und Beispielrezepturen

Sämtliche flüssige Komponenten der Rezeptur werden genau eingewogen und vorsichtig unter Vermeidung von Schaumbildung miteinander vermischt.

Die genau abgewogenen Fasern werden in kleinen Einheiten gleichmäßig dieser Mischung zugefügt, durch Verrühren (bei niedriger Drehzahl) vollständig mit der wässrigen Lösung benetzt.

Danach werden die genau abgewogenen Leichtfüllstoffe und Mineralien untereinander in einem Freifallmischer vorgemischt und unter gleichmäßigem Rühren der wässrigen Mischung in einem Zwangsmischer zugeführt. Diese werden dann unter gleichmäßigem langsamem Rühren ca. 25 min miteinander vermengt. Hohe Scherkräfte, Druck und Reibung sind weitestgehend zu vermeiden, um die mikrozellular geblähten Vulkangesteine und Mikroglashohlkugeln nicht zu beschädigen.

Die Leichtfüllstoffe sollten vollständig benetzt sein und einen gleichmäßigen lockeren Mörtel beziehungsweise eine plastische Masse ergeben. Diese Massen werden in Formen gefüllt und auf eine Kerntemperatur oberhalb der Lösungstemperatur der faserigen Klebstoffe erhitzt, ohne jedoch dem Mörtel unnötig Wasser zu entziehen (daher Anwesenheit von mit Wasserdampf gesättigter Umgebungsluft). Erst nach Erreichen der Kerntemperatur beginnt die eigentliche Trocknung bei vorzugsweise ca. 70 C. Eine Nach- oder Endtrocknung ist bei Temperaturen bis maximal 150 °C möglich.

### Beispielrezeptur für den Mörtel

| | |
|---|---|
| Wasser | 50 Gew.-% |
| | |
| Bindemittel gesamt, | 16 Gew.-% |
| davon: | |
| 40% COL.9^{®} 2000 von der Firma BASF | |
| 60% Levasil^{®} 100/45 von der Firma Obermeier | |
| | |
| Fasern gesamt, | 1 Gew.-% |
| davon: | |
| 55 Gew.-% Kuralon^{©} R10 der Firma Kuraray | |
| 30 Gew.-% Steinwolle der Firma Rockwool | |
| 15 Gew.-% Carbonfasern Tenax^{®} A HT C124 | |
| | |
| Wasserabspaltende Mineralien | 6 Gew.-% |
| | |
| Leichtfüllstoffe | 25 Gew.-% |
| davon: | |
| 85 Gew.-% K1^{®} der Firma 3M | |
| 10 Gew.-% K15^{®} der Firma 3M | |
| 5 Gew.-% G 100EC^{®} der Firma Noblite | |
| | |
| Hilfsstoffe | < 2 Gew.-% |

## Patentansprüche

1. Kälte- und wärmedämmendes Brandschutzformteil, enthaltend
• 8 bis 25 Gew.-% eines organisch-anorganischen Hybrid-Bindemittels, welches feinteilige Kieselsäure und ein organisches Polymer enthält,
• 0,5 bis 15 Gew.-% Fasern,
• 45 bis 75 Gew.-% mindestens eines Leichtfiillstoffes und
• 6 bis 18 Gew.-% mindestens eines wasserabspaltenden Minerals,
**dadurch gekennzeichnet,**
**dass** die Fasern ausgewählt sind aus der Gruppe der organischen, hydrophilen oder wasserlöslichen Fasern, die in Anwesenheit von Wasser und bei Temperaturen größer gleich 20 °C und unterhalb der Siedetemperatur des Wassers adhäsive Eigenschaften zeigen.

2. Brandschutzformteil nach Anspruch 1,
**dadurch gekennzeichnet,**
**dass** das organisch-anorganische Hybrid-Bindemittel eine Dispersion von Kieselsäure in einem Acrylatpolymer enthält, wobei amorphe Nanopartikel der Kieselsäure in dem Acrylatpolymer homogen eingebettet sind und das Acrylatpolymer ein Polymer von Acrylsäure oder von Methacrylsäure darstellt.

3. Brandschutzformteil nach Anspruch 1 oder 2,
**dadurch gekennzeichnet,**
**dass** die Fasern ausgewählt sind aus der Gruppe der organischen hydrophilen Fasern, die bei Temperaturen zwischen 20° und 100 °C adhäsive Eigenschaften zeigen.

4. Brandschutzformteil nach einem der Ansprüche 1 bis 3,
**dadurch gekennzeichnet,**
**dass** die Gruppe der organischen hydrophilen Fasern Polyvinylalkohol-Fasern umfasst.

5. Brandschutzformteil nach einem der vorhergehenden Ansprüche,
**dadurch gekennzeichnet,**
**dass** der Leichtfüllstoff ein geblähter geschlossenzelliger mineralischer Leichtfüllstoff mit einer Schüttdichte von weniger als 200 kg/m³ nach EN ISO 60 ist.

6. Brandschutzformteil nach einem der vorhergehenden Ansprüche,
**dadurch gekennzeichnet,**
**dass** der Leichtfüllstoff geblähtes, geschlossenzelliges Vulkangestein und/oder Glashohlkugeln umfasst.

7. Brandschutzformteil nach einem der vorhergehenden Ansprüche,
**dadurch gekennzeichnet,**
**dass** es zusätzlich Fasern, insbesondere Kohlenstofffasern und/oder mineralische Fasern, enthält.

8. Brandschutzformteil nach einem der vorhergehenden Ansprüche,
**dadurch gekennzeichnet,**
**dass** es ausgebildet ist als Rohrschale oder Bogen oder T-Stück oder als Platte.

9. Brandschutzformteil nach einem der vorhergehenden Ansprüche,
**dadurch gekennzeichnet,**
**dass** es als wasserabspaltendes Mineral Aluminiumtrihydrat, Kaolin, Kaolinit, und/oder feinteiliges Siliciumdioxid enthält.

10. Brandschutzformteil nach Anspruch 9,
**dadurch gekennzeichnet,**
**dass** das Siliciumdioxid als Kieselsäuresol, insbesondere Kieselerde vorliegt.

11. Brandschutzformteil nach einem der vorhergehenden Ansprüche,
**dadurch gekennzeichnet,**
**dass** es Aluminiumtrihydrat als wasserabspaltendes Mineral enthält.

12. Brandschutzformteil nach einem der vorhergehenden Ansprüche 9 oder 10,
**dadurch gekennzeichnet,**
**dass** das wasserabspaltende Mineral als ein Gemisch aus Kieselsäuresol und Kaolin/Kaolinit vorliegt.

13. Verfahren zur Herstellung eines kälte- und wärmedämmenden Brandschutzformteils nach einem der vorhergehenden Ansprüche,
**dadurch gekennzeichnet,**
**dass** es durch Formgebung einer plastischen Masse und Trocknung bei Temperaturen zwischen Raumtemperatur und der Siedetemperatur des Wassers hergestellt wird.

14. Verfahren nach Anspruch 13,
**dadurch gekennzeichnet,**
**dass** die Masse mindestens einen Leichtfüllstoff, ein Bindemittel, ein wasserabspaltendes Mineral, Fasern aus der Gruppe der organischen, hydrophilen Fasern, die in Anwesenheit von Wasser bei Temperaturen größer gleich 20°C und unterhalb der Siedetemperatur des Wassers adhäsive Eigenschaften zeigen, und Wasser enthält,
wobei man als Leichtfüllstoff geblähtes geschlossenzelliges Vulkangestein, das mit einer oberflächlichen Wasserschutzschicht ausgerüstet ist, und/oder Glashohlkugeln einsetzt,
wobei als Bindemittel mindestens ein organisch-anorganisches Hybrid-Bindemittel eingesetzt wird, welches feinteilige Kieselsäure und ein organisches Polymer enthält, und wobei die Masse als wasserabspaltendes Mineral Aluminiumtrihydrat, Kaolin, Kaolinit und/oder feinteiliges Siliciumdioxid, vorzugsweise Kieselsol, insbesondere Kieselerde enthält.

15. Verfahren nach Anspruch 13 oder 14,
**dadurch gekennzeichnet,**
**dass** das in der plastischen Masse eingesetzte Hybrid-Bindemittel feine Partikel enthält, die wiederum aus amorphen Kieselsäurepartikeln zusammengesetzt sind, die in einem in Wasser gelösten Polymer auf Acrylatbasis dispergiert sind, insbesondere n-Butylacrylat und Methylmethacrylat und/oder Latex.

16. Verfahren nach einem der Ansprüche 13 bis 15,
**dadurch gekennzeichnet,**
**dass** in der plastischen Masse eine Kieselerde eingesetzt wird, die feine Kieselsäure-Kaolinit-Partikel enthält, deren Oberfläche mit einem Netzmittel, insbesondere einem Silan, beschichtet ist.

17. Verfahren nach einem der Ansprüche 13 bis 16,
**dadurch gekennzeichnet,**
**dass** in der plastischen Masse ein Gemisch unterschiedlicher Fasern, insbesondere hydrophilen oder wasserlöslichen adhäsiven Fasern und mineralischen Fasern und/oder Kohlenstofffasern eingesetzt werden.

18. Verfahren nach einem der Ansprüche 13 bis 17,
**dadurch gekennzeichnet,**
**dass** man die plastische Masse vollständig auf die Lösungstemperatur der hydrophilen oder wasserlöslichen adhäsiven Fasern in Anwesenheit von mit Wasserdampf gesättigter Luft erhitzt, bevor die Trocknung erfolgt.
